# EUROPÄISCHE PATENTSCHRIFT

(11) **EP 2 493 655 B1**
(45) Veröffentlichungstag und Bekanntmachung des Hinweises auf die Patenterteilung: **01.10.2014**
(21) Anmeldenummer: 10798477.5
(22) Anmeldetag: 30.10.2010
(51) Int. Cl.: B23Q 3/08, B25B 11/00

(54) **VORRICHTUNG ZUM FIXIEREN UND LÖSEN EINES BAUTEILS UND VERFAHREN**
DEVICE FOR FASTENING AND DETACHING A COMPONENT AND METHOD
DISPOSITIF POUR FIXER ET DÉTACHER UNE PIÈCE ET PROCÉDÉ ASSOCIÉ

(30) Priorität: 31.10.2009 DE 102009051555
(43) Veröffentlichungstag der Anmeldung: 05.09.2012
(73) Patentinhaber: MTU Aero Engines AG, 80995 München (DE)
(72) Erfinder: FESSLER-KNOBEL, Martin, 80639 München (DE); HUTTNER, Roland, 82287 Jesenwang (DE)
(86) Internationale Anmeldenummer: PCT/DE2010/001278
(87) Internationale Veröffentlichungsnummer: WO 2011/050793

(56) Entgegenhaltungen:
- WO-A1-2010/105612
- CN-U- 201 795 205
- US-A1- 2007 221 328
- US-B1- 6 503 356

## Beschreibung

Die Erfindung betrifft eine Vorrichtung zum Fixieren und Lösen eines Bauteils nach dem Oberbegriff des Patentanspruchs 1 und ein Verfahren zum Fixieren und Lösen eines Bauteils nach dem Oberbegriff des Patentanspruchs 5. Eine solche Vorrichtung und ein solches Verfahren sind z.B. aus dem Patent dokument US 6, 503, 356 B bekannt.

>

Bauteile durchlaufen häufig bis zur Erreichung ihrer Endform eine Vielzahl von Bearbeitungsstationen. Die Positionierung der Bauteile in den Bearbeitungsstationen erfolgt über Bauteilträger, in denen die Bauteile fixiert werden. Die Fixierung der Bauteile in den Bauteilträgem muss schnell und sicher erfolgen sowie einfach lösbar sein.

Die deutsche Patentanmeldung DE 10 2007 020 957 A1 der Anmelderin schlägt beispielsweise eine auf einer Klebeverbindung basierende Fixierung einer Turbinenschaufel auf einem Bauteilträger vor. Der Bauteilträger hat eine konturnahe Klebefläche, auf die ein Klebemittel großflächig aufgetragen wird. Nach dem Auftragen des Klebemittels wird die Turbinenschaufel auf dem Bauteilträger positioniert und eine thermische Aushärtung des Klebemittels durchgeführt. Das Lösen der Klebeverbindung erfolgt vorzugsweise thermisch, kann jedoch auch chemisch erfolgen.

Ebenso ist es bekannt, ein Bauteil über eine Vielzahl von Anbindungselementen bzw. Adaptern an einem Bauteilträger mittels Klebungen zu fixieren. Aufgrund der Vielzahl von Klebeverbindungen und die hohen Klebekräften ist es jedoch verhältnismäßig aufwendig, die Anbindungselemente chemisch oder thermisch von dem Bauteil und dem Bauteilträger zu lösen.

Aufgabe der vorliegenden Erfindung ist es, eine Vorrichtung zum Fixieren und Lösen eines Bauteils an bzw. von einem Bauteilträger, die die vorgenannten Nachteile beseitigt und ein schnelles und einfaches Aufheben der Klebungen ermöglicht, sowie ein Verfahren zu schaffen, das ein schnelles und einfaches Fixieren und Lösen eines Bauteils an bzw. von einem Bauteilträger erlaubt.

Diese Aufgabe wird gelöst durch eine Vorrichtung mit den Merkmalen des Patentanspruchs 1 und durch ein Verfahren mit den Schritten des Patentanspruchs 5.

Eine erfindungsgemäße Vorrichtung hat zumindest ein Anbindungselement zur Fixierung eines Bauteils an einem Bauteilträger mittels Klebungen. Erfindungsgemäß weist die Vorrichtung zumindest ein Anbindungselement auf, das an dem Bauteilträger mittels Klebungen anbindbar ist, wobei die Vorrichtung eine mechanische Trenneinrichtung zum Lösen der Klebungen aufweist und die Trenneinrichtung ein zum Bauteilträger und zum Bauteil verschiebbares Schiebeelement aufweist. Das Schiebeelement ist linear verschiebbar und an den Klebungen angeordnet ist und die Trenneinrichtung bauteilträgerseitig das in einer Führungsbahn geführte keilartige Schiebeelement aufweist, wobei beidseits der Führungsbahn ein Sockel am Bauteilträger zur Aufnahme des Anbindungselementes ausgebildet ist. An dieser Lösung ist insbesondere vorteilhaft, dass eine thermische Schädigung und somit Schwächung der Klebung nicht mehr notwendig ist. Das Aufheben der Klebeverbindungen erfolgt rein mechanisch, wobei durch Abschälen eine deutliche Verringerung des Kraftaufwandes beim Lösen erzielbar ist. Des Weiteren ist vorteilhaft, dass das mechanische Lösen eine Automatisierung des Ablösevorganges erlaubt, so dass innerhalb kürzester Zeit sämtliche Anbindungselemente sowohl von dem Bauteil als auch von dem Bauteilträger entfernt werden können.

Die Schäleinrichtung weist ein in einer bauteilträgerseitigen Führungsbahn geführtes keilartiges Schiebeelement auf. Dabei ist die Führungsbahn von zwei Sockeln zur Aufnahme des Bauteils gebildet. Hierdurch ist es bei einer Verwendung von mehreren Anbindungselementen möglich, bei einer Bewegung des Schiebeelements entlang der Führungsbahn die Anbindungselemente nacheinander von dem Bauteilträger bzw. den Sockeln und gleichzeitig von dem Bauteil zu lösen.

Bei einem anderen Ausführungsbeispiel weist der Bauteilträger für jedes Anbindungselement zumindest einen Anschlag zur Lagepositionierung desselben auf. Dabei kann die Schaleinrichtung ein Schiebeelement mit zumindest einem Maul haben, das in Schieberichtung geöffnet ist, so dass bei einer Bewegung des Schiebeelementes zum Bauteilträger und zum Bauteil das Maul auf den Zapfen aufläuft und das zumindest eine Anbindungselement gegen den Anschlag gedrückt wird und dadurch von dem Bauteilträger und dem Bauteil ablösbar ist.

Bei einem weiteren Ausführungsbelspiel weist die Schaleinrichtung ein zangenartiges Drehwerkzeug auf. Ein derartiges Drehwerkzeug ist insbesondere kostengünstig herstellbar.

Zur Einstellung einer optimalen Klebespaltbreite ist es vorteilhaft, wenn zwischen dem zumindest einem Anbindungselement und dem Bauteil bzw. dem Bauteilträger Distanzelemente angeordnet sind, deren Höhe der jeweiligen Klebespaltbreite entspricht.

Bei einem Ausführungsbeispiel ist eine bauteilträgerseitige Klebefläche zur Aufnahme des Anbindungselements als Schrägfläche bzw. schiefe ausgebildet, so dass sich das Anbindungselement bei Anordnung des anzubindenden Bauteils am Fuße der schiefen Ebene selbsttätig in seiner Sollposition fixiert bzw. in diese überführt.

Bei einem erfindungsgemäßen Verfahren zum Fixieren und Lösen eines Bauteils an bzw. von einem Bauteilträger mittels Klebungen wird das Bauteil zuerst über zumindest ein Anbindungselement an dem Bauteilträger fixiert. Dann werden die Klebeverbindungen zwischen dem Anbindungselement und dem Bauteil bzw. dem Bauteilträger ausgehärtet und das Bauteil wird entsprechend bearbeitet. Abschließend werden die Klebungen mittels Schälwirkung aufgehoben. In dem erfindungsgemäßen Verfahren wird das Schiebeelement neben der Klebung linear verschoben und eine Trenneinrichtung bauteilträgerseitig das in einer Führungsbahn befindliche keilartige Schiebeelement geführt, wobei beidseits der Führungsbahn ein Sockel am Bauteilträger zur Aufnahme des Anbindungselementes verwendet wird.

Bei einem Ausführungsbeispiel wird die zumindest eine Klebung des Anbindungselementes zum Bauteil und die zumindest eine Klebung des Anbindungselementes zum Bauteilträger gleichzeitig aufgehoben. Hierdurch ist nur ein Schälvorgang notwendig, so dass das Bauteil innerhalb kürzester Zeit von dem Bauteilträger gelöst werden kann.

Bevorzugterweise wird die zumindest eine Klebung des Anbindungselementes zum Bauteil durch Hebelkräfte und die zumindest eine Klebung des Anbindungselementes zum Bauteilträger durch Torsionskräfte aufgehoben. Dies kann zum Beispiel durch das Schiebeelement erfolgen, das zum Bauteilträger und zum Bauteil bewegt wird und dabei das Anbindungselement von dem Bauteilträger abhebelt. Ebenso kann das Anbindungselement von dem Bauteilträger über ein Drehwerkzeug abgedreht werden.

Bei einem Ausführungsbeispiel fixiert sich das Anbindungselement selbsttätig In seiner Sollposition. Hierdurch wird eine Fehlpositionierung des Bauteils ausgeschlossen. Dabei kann das Anbindungselement, beispielsweise aufgrund seiner Gewichtskraft, entlang des Bauteilträgers gleiten und seine Sollposition durch ein Auflaufen auf das Bauteil definiert werden.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen
Fig. 1 einen Teilschnitt eines Ausführungsbeispiels einer erfindungsgemäßen Vorrichtung,
Fig. 2 eine Schnittdarstellung der Vorrichtung aus Fig. 1,
Fig. 3 ein Beispeil, das nicht unter den Ansprüchen fällt.
Fig. 4 eine Seitenansicht eines zweiten Beispiels,
Fig. 5 eine Detaildarstellung der Vorrichtung aus Fig. 4, und
Fig. 6 ein weiteres Beispiel, das nicht unter den Ansprüchen fällt.

In den Figuren tragen gleiche konstruktive Elemente die gleichen Bezugsziffern, wobei bei mehreren gleichen konstruktiven Elementen In einer Figur aus Gründen der Überslchtlichkeit nur einige dieser konstruktiven Elemente mit einem Bezugszeichen versehen sind.

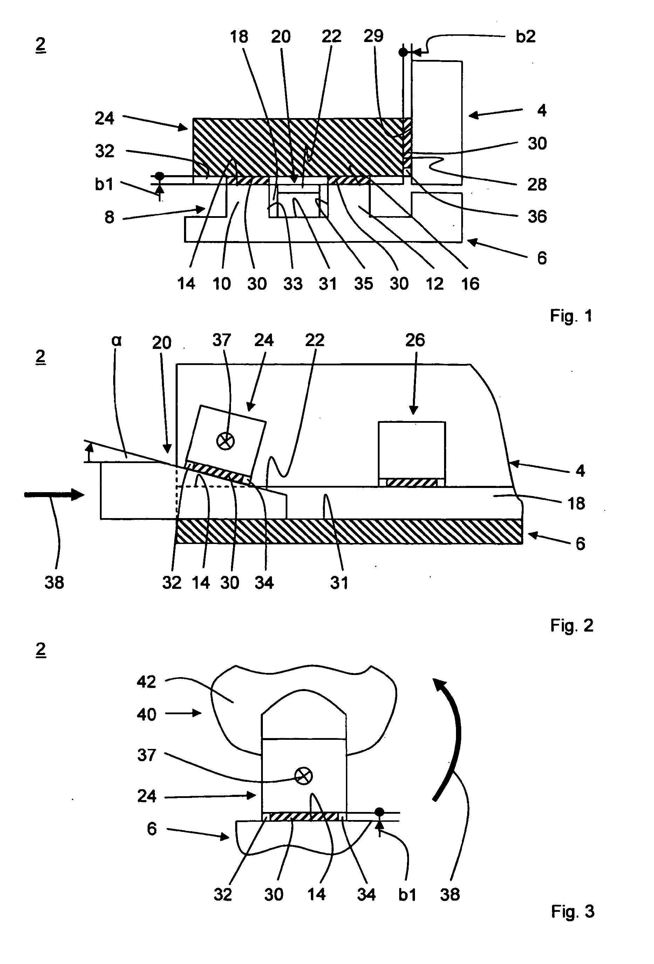

Fig. 1 zeigt eine Vorrichtung 2 zur Anordnung eines Bauteils 4 an einem Bauteilträger 6 mit einer erfindungsgemäßen Schäl- bzw. mechanischen Trenneinrichtung 8. Der Bauteilträger 6 hat zwei voneinander beabstandete Sockel 10, 12, die jeweils eine Vielzahl von Klebeflächen 14, 16 aufweisen. Die Sockel 10, 12 begrenzen eine Führungsbahn 18, in der ein Keil 20 mit einer Schrägfläche 22 geführt ist.

Das Bauteil 4 hat in dem gezeigten Ausführungsbeispiel einen rechteckigen Querschnitt mit einer Längserstreckung in Richtung des Bauteilträgers 6 und ist über eine Vielzahl von Anbindungselementen 24, 26 (siehe Fig. 2) an dem Bauteilträger 6 befestigt.

Die Anbindungselemente 24, 26 haben eine quaderartige Gestalt mit zwei voneiannder beabstandeten und im Randbereich angeordneten Längsleisten 32, 34, mit denen sie sich auf den Klebeflächen 14, 16 abstützen. Ebenso haben sie eine sich von einer sphärischen Stirnfläche 28 erstreckende randbereichsseitige Stirnleiste 36, die sich in Anlage mit einer gegenüberliegenden Bauteilfläche 29 befindet.

Die Längsleisten 32, 34 und die Stirnleiste 36 sind fest mit den Anbindungselementen 24, 26 verbunden bzw. mit diesen einstückig ausgebildet. Sie definieren Klebespalte mit jeweils einer optimalen Breite b1, b2, in denen im Bereich der Klebeflächen 14, 16 und der Bauteilfläche 29 Klebemittel 30 zur Herstellung von drei Klebeverbindungen angeordnet ist. Die Aushärtung des Klebemittels 30 erfolgt bevorzugterweise über elektromagnetische Strahlung [z.B. Licht].

Die Führungsbahn 18 hat einen rechteckigen Querschnitt mit einer bauteilträgerseitigen ebenen Führungsfläche 31 zur Führung des Keils 20. Seitlich ist die Führungsbahn 18 von einander zugewandten Sockelflächen 33, 35 begrenzt.

Zum Lösen der Anbindungselemente 24, 26 von dem Bauteilträger 6 bzw. dem Bauteil 4 wird der Keil 20 in die Führungsbahn 18 eingesetzt und gemäß dem Pfeil 38 auf der Führungsfläche 31 entlang der Führungsbahn 18 bewegt, so dass der Keil 20 mit seiner Schrägfläche 22 auf die ihm zuerst zugewandte Längsleiste 32 des gemäß der Darstellung in Figur 2 linken Anbindungselements 24 aufläuft. Der Keil 20 wird weiter bewegt und das Anbindungselement 24 wird durch Schälwirkung von dem Bauteilträger 6 abgehebelt. Dabei kippt es über seine hintere Längsleiste 34 weg und die Klebungen im Bereich der Klebeflächen 14, 16 werden gelöst. Gleichzeitig wird das Anbindungselement 24 quasi um seine Längsachse 37 tordiert und die Klebung im Bereich der Stirnfläche 28 wird durch drehende Schälwirkung gelöst. Nach dem Lösen des ersten Anbindungselementes 24 wird der Keil 20 in Pfeilrichtung 38 weiterbewegt und das benachbarte Anbindungselement 26 wird auf gleiche Art und Weise von dem Bauteilträger 6 bzw. dem Bauteil 4 gelöst. Somit werden die bauteilträgerseitigen Klebungen im Bereich der Klebeflächen 14, 16 über Hebelkräfte und die bauteilseitig Klebung im Bereich der Stirnfläche 28 über Torsionskräfte aufgehoben.

Bei Verwendung von UHU Multifest als Klebemittel 30 mit einer Aushärtzeit von 7,5 h und bei einer Klebespaltbreite b1, b2 = 0,4 mm sowie bei einem Keilwinkel a = 10° genügen bei einer wirksamen sphärischen Stirnfläche 28 zum Bauteil 4 von 180 mm² und bei zwei wirksamen Klebeflächen 14, 16 von je 150 mm² zum Bauteilträger 6 bereits leichte Keilschläge zum Lösen der Anbindungselemente 24, 26.

Fig. 3 zeigt ein Beispiel, bei dem ein an einem Bauteilträger 6 über Anbindungselemente 24 angebundenes nicht gezeigtes Bauteil mittels eines Drehwerkzeugs 40 von dem Bauteilträger 6 tordierend gelöst wird. Das Bauteil, der Bauteilträger 6 und die Anbindungselement 24 sind im Wesentlichen entsprechend den in den Figur 1 und 2 Vorbeschriebenen ausgeführt, so dass diesbezügliche Erläuterungen zur Vermeidung von Wiederholungen entfallen. Im Prinzip ist lediglich der Keil 20 durch das Drehwerkzeug 40 ersetzt.

Das Drehwerkzeug 40 dient zur Verdrehung 38 des Anbindungselements 24 gegen den Uhrzeigersinn quasi um seine Längsachse 37, so dass das Anbindungselement 24 gemäß der Darstellung um seine linke Längsleiste 32 wegkippt. Zum abschnittsweisen Umgreifen des Anbindungselements 24 weist es ein Maul 42 mit zwei bewegbaren Klauen auf. Bevorzugterweise greift das Drehwerkzeug 40 wie in dem Ausführungsbeispiel gezeigt mit seinem Maul 42 orthogonal zur Klebefläche 14 bzw. zum Bauteilträger 6, d.h. quasi seitlich an dem Anbindungselement 24, an. Es kann jedoch mit seinem Maul 42 auch orthogonal zur Stirnfläche bzw. zum Bauteil 4, d.h. quasi stirnseitig an dem Anbindungselement 24, angreifen.

Bei Verwendung von UHU Multifest als Klebemittel 30 mit einer Aushärtzeit von 7,5 h und bei einer Klebespaltbreite zwischen dem Anbindungselement 24 zum Bauteilträger 6 bzw. zum Bauteil b1, b2 = 0,4 mm genügt bei einem quasi-seitlichen Ansetzen des Drehwerkzeugs 40 an dem Anbindungselement 24 bei einer wirksamen Klebung im Bereich der von dem Betrachter abgewandten sphärischen Stirnfläche zum Bauteil 4 von 180 mm² sowie bei zwei wirksamen Klebeflächen 14, 16 zum Bauteilträger 6 von je 150 mm² ein ungefähres Abbrechmoment M = 80 Nm.

Bei Verwendung von UHU Multifest als Klebemittel 30 mit einer Aushärtzeit von 7,5 h und bei einer Klebespaltbreite b1, b2 = 0,4 mm genügt bei einem quasi-stirnseitigen Ansetzen des Drehwerkzeugs 40 an dem Anbindungselement 24 bei einer planen und klebewirksamen Stirnfläche zum Bauteil 4 von 210 mm² und bei zwei wirksamen Klebeflächen 14, 16 von je 150 mm² zum Bauteilträger 6 ein Abbrechmoment in den ungefähren Grenzen von 50 Nm ≤ M s 55 Nm.

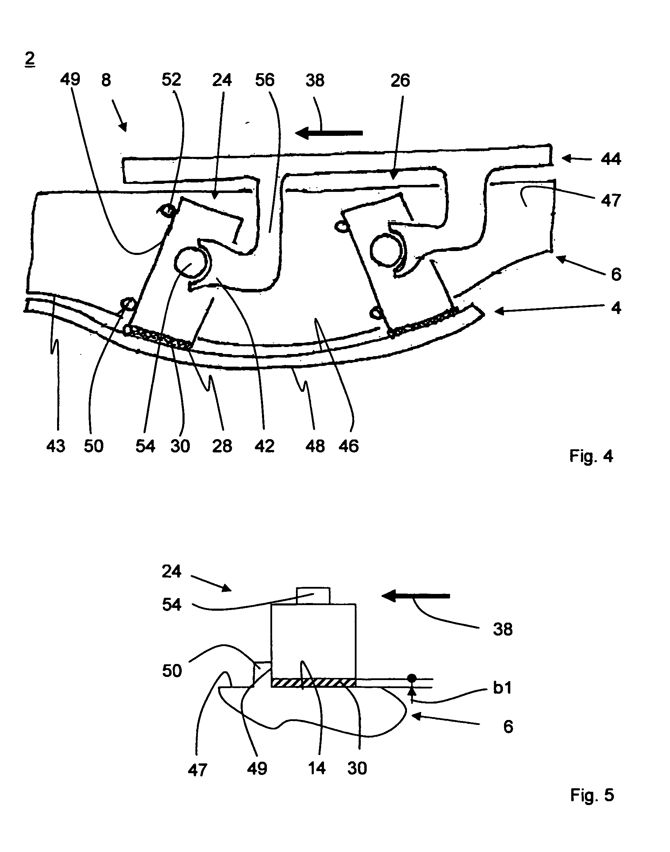

Fig. 4 zeigt eine Vorrichtung 2 zum Fixieren und zum Lösen eines Bauteils 4 an bzw. von einem Bauteilträger 6 mit einer Schäleinrichtung 8.

Das Bauteil 6 ist plattenförmig mit einer dem Bauteilträger 6 zugewandten Konkavfläche 46 und einer von dem Bauteilträger 6 abgewandten konvexen Oberfläche 48 versehen. Es ist über eine Vielzahl von Anbindungselementen 24, 26 an dem Bauteilträger 6 angebunden. Die Anbindung des Bauteils 4 an den Anbindungselementen 24, 26 erfolgt jeweils über eine stirnseitige Klebeverbindung, die durch ein zum Beispiel mittels elektromagnetischer Strahlung thermisch ausgehärtetes Klebemittel 30 hergestellt wird, das in einem Klebespalt zwischen der Konkavfläche 46 und einer jeweiligen Stirnfläche 28 der Anbindungselemente 24, 26 angeordnet ist.

Der Bauteilträger 6 hat eine bezüglich der Konkavfläche 46 des Bauteils 4 kontumahe Bauteilträgerfläche 43 und jeweils zwei voneinander beabstandete Anschläge 50, 52 zur Lagepositionierung jeweils eines der Anbindungselemente 24, 26. Die Anschläge 50, 52 erstrecken sich von einer senkrecht bzw. nahezu senkrecht zur Konkavfläche 46 verlaufenden Seitenfläche 47 des Bauteilträgers 6. Sie haben jeweils eine derartige Erstreckung weg von der Seitenfläche 47, dass sie nur in einem klebespaltnahen Seitenflächenbereich 49 an den Anbindungselemente, 24, 26 angreifen (vgl. Figur 5).

Die Anbindungselemente 24, 26 haben eine quaderartige Gestalt und sind über ein Klebemittel 30 im Bereich jeweils einer bauteilträgerseitigen Klebefläche 14 mit dem Bauteilträger 6 verbunden (vgl. Fig. 5). Sie liegen mit dem jeweils klebespaltnahen Seitenflächenbereich 49 an den Anschlägen 50, 52 an An einer von der bauteilträgerseitigen Klebung abgewandten Seite weisen sie jeweils einen Zapfen 54 auf.

Die Schaleinrichtung 8 weist ein relativ zum Bauteilträger 6 und zum Bauteil 4 verschiebbares Schieberelement 44 mit einer Vielzahl von L-förmigen Armen 56 auf. Die Anzahl der Arme 56 entspricht der Anzahl der Anbindungselemente 24, 26 bzw. der Zapfen 54, wobei zum abschnittsweisen Umgreifen der Zapfen 54 die Arme 56 endseitig mit einem in Richtung der Anschläge 50, 52 und in Schieberichtung geöffneten Maul 42 mit zwei Klauen versehen sind.

Bei einer Verschiebung des Schieberelementes 44 in Pfeilrichtung 38 laufen die Klauen auf die Zapfen 54 der Anbindungselemente 24, 26 auf. Die Anbindungselemente 24, 26 kippen über die Anschläge 50, 52 weg, wodurch gleichzeitig bei allen Anbindungselementen 24, 26 die bauteilträgerseitige Klebeverbindung im Bereich der Klebeflächen 14 sowie die bauteilseitige Klebeverbindung im Bereich ihrer Stirnflächen 28 gelöst wird und somit das Bauteil 4 von dem Bauteilträger 8 und den Anbindungselementen 24, 26 entfernt wird.

Im Gegensatz zu der vorbeschriebenen Keillösung nach den Figuren 1 und 2 erfolgt bei diesem Ausführungsbeispiel das Lösen der Anbindungselemente 24, 26 nicht sequentiell zeitlich nacheinander, sondern simultan bzw. zeitlich parallel. Ein weiterer Unterschied zwischen der Keillösung nach den Figuren 1 und 2 und dem Ausführungsbeispiel nach den Figur 4 und 5 besteht darin, dass bei der Keillösung zwei Klebeverbindungen 14, 16 zwischen jedem Anbindungselement 24, 26 und dem Bauteilträger 6 geschaffen werden, wohingegen bei dem hier beschriebenen Ausführungsbeispiel die Anbindungselemente 24, 26 Ober nur eine Klebeverbindung an dem Bauteilträger 6 angebunden sind.

Bei einem nicht dargestellten Ausführungsbeispiel der Erfindung, werden die Anbindungselemente 24, 26 zeitlich nacheinander gelöst.

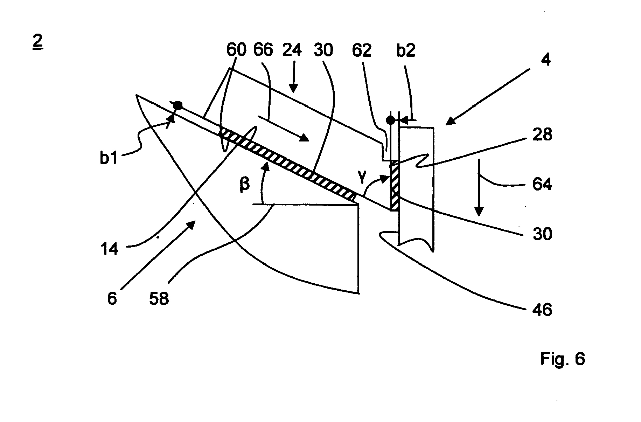

Figur 6 zeigt ein Beispiel einer Vorrichtung 2 zum Fixieren und Lösen eines Bauteils 4 mit einer bauteilträgerseitigen Klebefläche 14 zur Anbindung eines quaderförmigen Anbindungselements 24, die als eine schiefe Ebene mit dem Winkel β zur horizontalen Achse 58 des Bauteilträgers 6 angestellt ist. Das Bauteil 4 ist am Fuße der schiefen Ebene bzw. der Klebefläche 14 angeordnet und über das Anbindungselement 24 fest mit dem Bauteilträger 6 verklebt.

Das Anbindungselement 24 hat eine dem Bauteilträger 6 zugewandte Verbindungsfläche 60 und eine dem Bauteil 4 zugewandte Stirnfläche 28. Zur Ausbildung eines Klebespaltes mit jeweils einer konstanten Klebespaltbreite b1, b2 sind die Verbindungsfläche 60 und die Stirnfläche 28 konturnah zur Klebefläche 14 bzw. zur gegenüberliegenden Bauteilfläche 46 ausgebildet. Hierdurch ist in dem gezeigten Ausführungsbeispiel bei im Wesentlichen vertikal verlaufender Bauteilfläche 46 die Stirnfläche 28 um den Winkel γ = 90° - β zur Verbindungsfläche 60 angestellt. Um zu verhindern, dass das Anbindungselement 24 mit einem von dem Bauteilträger 6 entfernt liegenden stirnflächenseitigen Kantenbereich gegen das Bauteil 4 stößt und somit eine Verbindung zwischen der Stirnfläche 28 und der Bauteilfläche 46 nicht bzw. nicht mit ausreichender Qualität herstellbar ist, ist die Stirnfläche 28 in diesem Kanten- bzw. Randbereich zurückgestuft bzw. das Anbindungselement 24 mit einer Ausnehmung 62 in diesem Kantenbereich versehen.

Die Anstellung der Klebefläche 14 des Bauteilträgers 6 zu seiner Horizontalachse 58 bewirkt, dass sich das Anbindungselement 24 selbsttätig in seine Sollposition überführt und in dieser fixiert, da es beim Aufkleben unter dem Einfluss der Gewichtskraft 64 selbsttätig in seiner gewünschten Position an dem Bauteil 4 verbleibt, so dass ein versehentliches Verrutschen und somit eine Fehlpositionierung des anzubindenden Bauteils 4 ausgeschlossen ist. Beispielsweise ist es möglich, dass das Anbindungselement 24 auf dem Klebemittel 30 im Klebespalt b1 in Richtung 66 des Bauteils 4 gleitet bis die optimale Breite des Klebespaltes b2 eingestellt ist. Diese kann zum Beispiel dadurch erreicht werden, dass das Anbindungselement 24 wie in Figur 1 gezeigt eine klebemittelfreie Stirnleiste 36 aufweist, deren Höhe der Sollbreite b2 entspricht und mit der es auf das Bauteil 4 bzw. auf dessen Bauteilfläche 46 aufläuft.

Offenbart ist eine Vorrichtung 2 mit zumindest einem Anbindungselement 24, 26 zum Fixieren und Lösen eines Bauteils 4 an bzw. von einem Bauteilträger 6 mittels Klebungen, wobei eine mechanische Schaleinrichtung 8 zum Lösen der Klebungen vorgesehen ist, sowie ein Verfahren zum Fixieren und Lösen eines Bauteils 4 an bzw. von einem Bauteilträger 6.

## Patentansprüche

1. Vorrichtung (2) zum Fixieren und zum Lösen eines Bauteils (4) an bzw. von einem Bauteilträger (6), das über zumindest ein Anbindungselement (24, 26) an dem Bauteilträger (6) mittels Klebungen anbindbar ist, wobei die Vorrichtung (2) eine mechanische Trenneinrichtung (8) zum Lösen der Klebungen und die Trenneinrichtung (8) ein zum Bauteilträger (6) und zum Bauteil (4) verschiebbares Schiebeelement (20, 44) aufweist,
**dadurch gekennzeichnet, dass**
- das Schiebeelement (20, 44) linear verschiebbar ist und an den Klebungen (14, 16) angeordnet ist und
- die Trenneinrichtung (8) bauteilträgerseitig das in einer Führungsbahn (18) geführte keilartige Schiebeelement (20) aufweist, wobei beidseits der Führungsbahn (18) ein Sockel (10, 12) am Bauteilträger (6) zur Aufnahme des Anbindungselementes (24, 26) ausgebildet ist.

2. Vorrichtung nach Anspruch 1, wobei der Bauteilträger (6) zumindest einen Anschlag (50, 52) zur Lagepositionierung des Anbindungselementes (24, 26) aufweist.

3. Vorrichtung nach Anspruch 2, wobei das Schiebeelement (44) zumindest ein in Schieberichtung geöffnetes Maul (42) aufweist.

4. Vorrichtung nach einem der vorhergehenden Ansprüche, wobei Distanzelemente (32, 34, 36) zum Einstellen einer optimalen Klebespaltbreite (b1, b2) vorgesehen sind.

5. Verfahren zum Fixieren und Lösen eines Bauteils (4) an bzw. von einem Bauteilträger (6), mit den Schritten:
- Fixieren des Bauteils (4) an dem Bauteilträger (6) über zumindest ein Anbindungselement (24, 26) mittels Klebungen,
- Aushärten der Klebungen,
- Bearbeiten des Bauteils (4) an dem Bauteilträger (6), und
- Aufheben der Klebungen,
- das Anbindungselement (24, 26) über ein Schiebeelement (20, 44) von dem Bauteilträger (6) abgehebelt wird,
**dadurch gekennzeichnet, dass**
das Schiebeelement (20, 44) neben der Klebung (14, 16) linear verschoben wird und eine Trenneinrichtung (8) bauteilträgerseitig das in einer Führungsbahn (18) befindliche keilartige Schiebeelement (20) führt, wobei beidseits der Führungsbahn (18) ein Sockel (10, 12) am Bauteilträger (6) zur Aufnahme des Anbindungselementes (24, 26) verwendet wird.

6. Verfahren nach Anspruch 5, wobei die Klebung des Anbindungselements (24, 26) zum Bauteil (4) durch Hebelkräfte und die Klebung des Anbindungselements (24, 26) zum Bauteilträger (6) durch Torsionskräfte aufgehoben wird.

## Claims

1. A device (2) for fixing to and detaching from a component carrier (6) a component (4) which can be connected to the component carrier (6) by way of at least one connecting element (24, 26) by means of adhesive bonds, wherein the device (2) has a mechanical separating device (8) to detach the adhesive bonds, and the separating device (8) has a sliding element (20, 44) which can be displaced with respect to the component carrier (6) and to the component (4), **characterised in that**
- the sliding element (20, 44) can be displaced in a linear manner and is arranged at the adhesive bonds (14, 16), and
- the separating device (8) has, on the component-carrier side, the sliding element (20) which is wedge-like and guided in a guideway (18), wherein a pedestal (10, 12) is formed on the component carrier (6) on both sides of the guideway (18) to accommodate the connecting element (24, 26).

2. A device according to claim 1, wherein the component carrier (6) has at least one stop (50, 52) to position the connecting element (24, 26).

3. A device according to claim 2, wherein the sliding element (44) has at least one jaw (42) that is open in the sliding direction.

4. A device according to one of the preceding claims, wherein spacer elements (32, 34, 36) are provided to adjust an optimum adhesive gap width (b1, b2).

5. Method for fixing and detaching a component (4) to and from a component carrier (6), having the steps:
- fixation of the component (4) to the component carrier (6) by way of at least one connecting element (24, 26) by means of adhesive bonds,
- curing of the adhesive bonds,
- processing of the component (4) on the component carrier (6), and
- lifting of the adhesive bonds,
- the connecting element (24, 26) is levered off from the component carrier (6) by way of a sliding element (20, 44),
**characterised in that**
the sliding element (20, 44) is displaced linearly alongside the adhesive bond (14, 16), and a separating device (8), on the component-carrier side, guides the wedge-like sliding element (20) located in a guideway (18), wherein on both sides of the guideway (18) a pedestal (10, 12) on the component carrier (6) is used to accommodate the connecting element (24, 26).

6. Method according to claim 5, wherein the adhesive bond of the connecting element (24, 26) to the component (4) is lifted by means of lever forces, and the adhesive bond of the connecting element (24, 26) to the component carrier (6) is lifted by means of torsional forces.

## Revendications

1. Dispositif (2) pour la fixation d'une pièce (4) contre un support de pièce (6) et son démontage de celui-ci, laquelle peut être assemblée par des zones de collage contre le support de pièce (6) au moyen d'au moins un élément d'assemblage (24, 26), ledit dispositif (2) comportant un dispositif de séparation mécanique (8) pour le détachement des zones de collage, et le dispositif de séparation (8) comportant un élément de poussée (20, 44) déplaçable vers le support de pièce (6) et vers la pièce (4),
**caractérisé en ce que**
- l'élément de poussée (20, 44) est déplaçable linéairement et est disposé contre les zones de collage (14, 16), et
- côté support de pièce, le dispositif de séparation (8) est pourvu de l'élément de poussée (20) coulissant dans une glissière de guidage (18), un socle (10, 12) sur le support de pièce (6) étant formé de part et d'autre de la glissière de guidage (18) pour la réception de l'élément d'assemblage (24, 26).

2. Dispositif selon la revendication 1, où le support de pièce (6) est pourvu d'au moins une butée (50, 52) pour le positionnement de l'élément d'assemblage (24, 26).

3. Dispositif selon la revendication 2, où l'élément de poussée (44) présente au moins une mâchoire (42) ouverte en direction de déplacement.

4. Dispositif selon l'une des revendications précédentes, où des éléments d'espacement (32, 34, 36) sont prévus pour l'ajustement d'une largeur d'interstice de collage (b1, b2) optimale.

5. Procédé pour la fixation et le démontage d'une pièce (4) contre un support de pièce (6), comprenant les étapes suivantes :
- fixation de la pièce (4) contre le support de pièce (6) par des zones de collage au moyen d'au moins un élément d'assemblage (24, 26),
- durcissement des zones de collage,
- usinage de la pièce (4) contre le support de pièce (6), et
- détachement des zones de collage,
- l'élément d'assemblage (24, 26) étant soulevé du support de pièce (6) par un élément de poussée (20, 44),
**caractérisé en ce que**
l'élément de poussée (20, 44) est déplacé linéairement à côté de la zone de collage (14, 16), et **en ce que**, côté support de pièce, un dispositif de séparation (8) coulisse l'élément de poussée (20) en forme de coin disposé dans une glissière de guidage (18), un socle (10, 12) sur le support de pièce (6) étant formé de part et d'autre de la glissière de guidage (18) pour la réception de l'élément d'assemblage (24, 26).

6. Procécé selon la revendication 5, où la zone de collage de l'élément d'assemblage (24, 26) sur la pièce (4) est détachée par efforts de levier, et où la zone de collage de l'élément d'assemblage (24, 26) sur le support de pièce (6) est détachée par des efforts de torsion.
